# EUROPEAN PATENT APPLICATION

(11) **EP 4 571 664 A1**
(43) Date of publication of application: **18.06.2025**
(21) Application number: 23857697.9
(22) Date of filing: 22.08.2023
(51) Int. Cl.: G06T 19/20, G06T 7/70, G06T 7/593, G06T 15/00, G06F 3/04815, G06F 3/04845

(54) **METHOD AND APPARATUS FOR GENERATING MARKER IN THREE-DIMENSIONAL SIMULATION**

(30) Priority: 22.08.2022 KR 20220104808
(71) Applicant: CLO Virtual Fashion Inc., Seoul 06236 (KR)
(72) Inventor: JON, In Gun, Seoul 06236 (KR)
(74) Representative: Gill Jennings & Every LLP
(86) International application number: PCT/KR2023/012414
(87) International publication number: WO 2024/043665

(57) **Abstract**

This method for generating a marker on a three-dimensional object in a three-dimensional simulation comprises: generating first depth information in pixel units corresponding to a three-dimensional object, on the basis of information on the viewpoint from which the three-dimensional object is viewed; generating a reference plane on the basis of a predetermined statistical value by assigning a weight to the first depth information; on the basis of the reference plane, generating a marker curved surface covering the three-dimensional object; and generating a marker on the marker curved surface on the basis of a user input.

## Description

### TECHNICAL FIELD

The following embodiments related to a method and devices for generating a marker in three-dimensional (3D) simulation.

### BACKGROUND ART

In the traditional clothing manufacturing industry, the process of sharing clothing data for design work was typically carried out by manually writing down the necessary details or physically delivering actual samples (e.g., fabric, materials, etc.). When physical samples were delivered offline, it posed the issue of taking a long time, and when photos and the like were sent online, there was a problem with accurately conveying information.

As industries continue to advance, efforts to digitize offline data are increasing. In line with this trend, the clothing industry is also seeing a growing demand to digitize design data.

When offering digitized design data to users, it is important to ensure the users may intuitively understand the data on a user interface (UI) and interact with the UI easily. Consequently, there is a growing demand in the industry for UIs that improve usability and convenience. Furthermore, there is also a need for UIs that make it easier for users to communicate and collaborate on design data.

The above description is information the inventor(s) acquired during the course of conceiving the present disclosure, or already possessed at the time, and was not necessarily publicly known before the present application was filed.

### DISCLOSURE OF THE INVENTION

### TECHNICAL SOLUTIONS

A method of generating a marker according to an embodiment includes generating, based on viewpoint information about a viewpoint from which the 3D object is viewed, first depth information in a pixel unit corresponding to the 3D object, generating a reference plane based on a predetermined statistical value by assigning a weight to the first depth information, generating, based on the reference plane, a marker curved surface covering the 3D object, and generating, based on a user input, a marker on the marker curved surface.

The first depth information in a pixel unit may be information determined based on a distance between a viewpoint comprised in the viewpoint information for each pixel and the 3D object.

The generating of the first depth information in a pixel unit may include generating first depth information comprising a depth value in a pixel unit of a first view space generated through view transform in a depth texture, wherein the first view space is a space in which a viewpoint comprised in the viewpoint information is an origin.

The generating of the reference plane may include calculating an average value by assigning a weight to the first depth information in the pixel unit and generating the reference plane based on the average value.

The generating of the reference plane may include calculating an average value by assigning a weight that gradually decreases from a central region to an edge region in an image obtained based on the viewpoint information.

The generating of the marker curved surface may include generating, based on the first depth information, a marker curved surface based on pixels closer to a viewpoint than the reference plane.

The generating of the marker curved surface may include generating a second depth texture using a projection matrix redefined based on the reference plane.

The generating of the marker curved surface may include generating second depth information comprising a depth value in a pixel unit of a second view space generated through view transform in the second depth texture and generating a marker curved surface based on the second depth information.

The second depth information may include a depth value determined based on the reference plane and a viewpoint.

The generating of the marker curved surface may include smoothing the marker curved surface.

The smoothing of the marker curved surface may include increasing second depth information in a pixel unit at a predetermined rate.

The smoothing of the marker curved surface may include processing Gaussian blur on the marker curved surface.

The smoothing of the marker curved surface may include processing Gaussian blur on a result obtained by increasing second depth information in a pixel unit at a predetermined rate.

The method may further include changing, based on a user input, at least one of a position of a marker or a marker identifier.

The method may further include when the generated marker is occluded by the 3D object because a viewpoint is changed, displaying the generated marker based on the changed viewpoint and allowing a user input for the generated marker.

The method may further include displaying an annotation on the generated marker.

A simulation device for performing a 3D simulation according to an embodiment includes a user interface (UI), a memory, and a processor, wherein the processor is configured to generate, based on viewpoint information about a viewpoint from which a 3D object is viewed, first depth information in a pixel unit corresponding to the 3D object, generate a reference plane based on a predetermined statistical value by assigning a weight to the first depth information, generate, based on the reference plane, a marker curved surface covering the 3D object, and generate a marker on the marker curved surface based on a user input.

### EFFECTS OF THE INVENTION

According to an aspect, a user may accurately place a marker at a desired position.

According to an aspect, the user may accurately place a marker at a desired position on a three-dimensional (3D) object through fine-tuning.

According to an aspect, through a marker placed at an accurate position on a 3D 3D object, a plurality of users may communicate smoothly based on the marker.

According to an aspect, by amplifying second depth information, it may be possible to prevent a marker from being positioned inside a 3D object.

According to an aspect, by applying Gaussian blur to the second depth information to smoothly adjust a depth change, a marker may be placed at a position that corresponds to the user's intuition.

### BRIEF DESCRIPTION OF DRAWINGS

FIG. 1 is a flowchart illustrating a method of generating a marker, according to an embodiment.
FIG. 2 is a diagram illustrating a process of generating a marker curved surface, according to an embodiment.
FIG. 3 is a diagram illustrating a method of assigning a weight to first depth information, according to an embodiment.
FIG. 4 is a diagram illustrating a reference plane according to an embodiment.
FIG. 5 is a diagram illustrating contour lines according to an embodiment.
FIG. 6 is a diagram illustrating a marker curved surface generated based on amplification, according to an embodiment.
FIG. 7 is a diagram illustrating a candidate position at which a marker may be generated, according to an embodiment.
FIG. 8 is a diagram illustrating a user interface (UI) on which a marker is displayed, according to an embodiment.
FIG. 9 is a diagram illustrating a UI on which a marker is displayed when a viewpoint is changed, according to an embodiment.
FIG. 10 is a block diagram illustrating a simulation device according to an embodiment.

### BEST MODE FOR CARRYING OUT THE INVENTION

The following structural or functional descriptions are exemplary to merely describe the embodiments, and the scope of the embodiments is not limited to the descriptions provided in the present specification.

Although terms of "first" or "second" are used to explain various components, the components are not limited to the terms. These terms should be used only to distinguish one component from another component. For example, a "first" component may be referred to as a "second" component, or similarly, and the "second" component may be referred to as the "first" component within the scope of the right according to the concept of the present disclosure.

It will be understood that when a component is referred to as being "connected" or "coupled" to another component, the component can be directly connected or coupled to the other component or intervening components may be present. On the contrary, it should be noted that if it is described that one component is "directly connected", "directly coupled", or "directly joined" to another component, a third component may be absent. Expressions describing a relationship between components, for example, "between", directly between", or "directly neighboring", etc., should be interpreted to be alike.

The singular forms "a", "an", and "the" are intended to include the plural forms as well, unless the context clearly indicates otherwise. It should be further understood that the terms "comprises" and/or "comprising," when used in this specification, specify the presence of stated features, integers, steps, operations, elements, components or a group thereof, but do not preclude the presence or addition of one or more of other features, integers, steps, operations, elements, components, or groups thereof.

Unless otherwise defined, all terms used herein including technical or scientific terms have the same meaning as commonly understood by one of ordinary skill in the art to which this disclosure pertains. Terms, such as those defined in commonly used dictionaries, should be construed to have meanings matching with contextual meanings in the relevant art, and are not to be construed to have an ideal or excessively formal meaning unless otherwise defined herein.

Hereinafter, embodiments will be described in detail with reference to the accompanying drawings. In the drawings, like reference numerals are used for like elements.

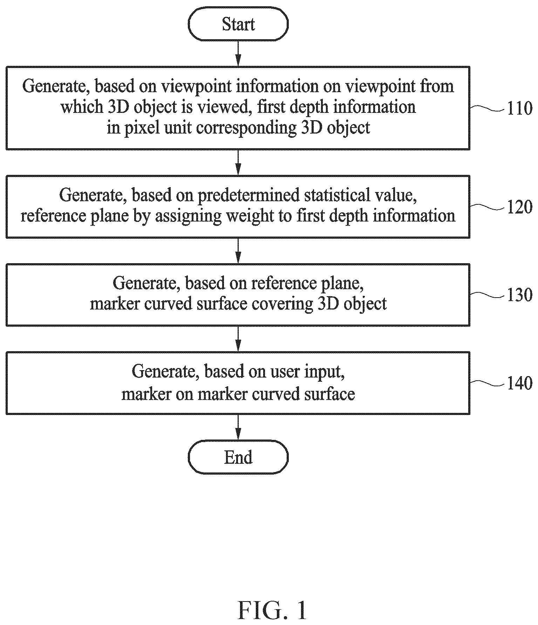

FIG. 1 is a flowchart illustrating a method of generating a marker, according to an embodiment. Referring to FIG. 1, a method of generating a marker on a three-dimensional (3D) object in a 3D simulation is described. The 3D object (hereinafter, this term may be interchangeably used as the term "3D object") may be a 3D object displayed in the 3D simulation. For example, the 3D object may include a garment model (e.g., an avatar and a character), an object, and a garment model wearing a 3D garment.

A processor 1030 according to an embodiment may display a 3D garment corresponding to a 3D object (e.g., a garment model) with a fitting simulation completed. In this case, the 3D garment may be, for example, a virtual garment for a 3D virtual character or a virtual garment for a 3D virtual avatar.

Geometry information on a 3D object (e.g., a 3D garment model) may correspond to information for configuring a skeleton of the 3D garment model, that is, the structure and/or shape of the 3D garment model. The geometry information on the 3D garment model may be classified, for example, by a plurality of garment patterns included in the 3D garment model or body parts of an avatar respectively corresponding to the plurality of garment patterns. The geometry information on the 3D garment model may include one file or a plurality of files corresponding to each garment pattern or each body part of the avatar.

Material information on the 3D garment may include, for example, a color of a 3D garment, the texture of a fabric, a light source effect of the fabric, a pattern of the fabric, the position and the size of a pattern displayed on the fabric, a type of a subsidiary material attached to the 3D garment, the position and the size of the subsidiary material, and the like but is not limited thereto.

The processor 1030 according to an embodiment may generate a marker on the 3D object. A user may display the marker on the 3D object and input information. The user may discuss a predetermined portion of the 3D object with another user through the marker. Thus, displaying a marker on a precise position on the 3D object may be crucial. A marker may be a displaying means of displaying a predetermined position on a user interface (UI). For example, the marker may be a means of displaying a predetermined position on the 3D object. The marker may be displayed at a set of coordinates on the 3D object. The marker may be displayed not only on the 3D object but also on the background. The marker may have various shapes, but embodiments are not limited thereto. However, when the marker is displayed based on the coordinates of a pixel corresponding to the 3D object, the marker may be displayed inaccurately. When the marker is displayed inaccurately, there may be miscommunication between users. Therefore, the processor 1030 may generate a marker curved surface covering the 3D object and then generate the marker on the marker curved surface based on a user input. When the marker is generated on the marker curved surface, the marker may be displayed exactly at the user's desired position visually.

The process of generating a marker according to an embodiment may be performed by a server or a terminal. When the process of generating a marker is performed on the server, the server may receive viewpoint information and a user input from a terminal and generate a marker. When the process of generating a marker is performed on the terminal, the terminal may generate the marker.

The server may perform various garment fitting simulations for producing a garment or identifying the shape of the produced garment in advance and provide the terminal with a 3D object corresponding to a simulation result. The server may be linked to an application program installed on another server and/or terminal for a UI, a function, an operation, a service, or the like. The server may correspond to a server for providing a 3D fitting simulation result image, but embodiments are not limited thereto. The server may be, for example, a single server computer or a system similar to the single server computer, one or more server banks, or a plurality of servers arranged in different arrangements. The server may be placed in a single facility or may be "cloud" servers distributed across numerous different geographical locations.

The terminal may provide the user with the 3D simulation result received from the server through a viewer provided via an application and/or a web platform installed on a corresponding device. Furthermore, the terminal may receive a change in the 3D object and transmit the change to the server.

The terminal may include a display, a memory, a processor, and a communication interface. The terminal may include, for example, a personal computer (PC), a netbook, a laptop computer, a personal digital appliance (PDA), a smartphone, a wearable device, and various devices performing similar functions.

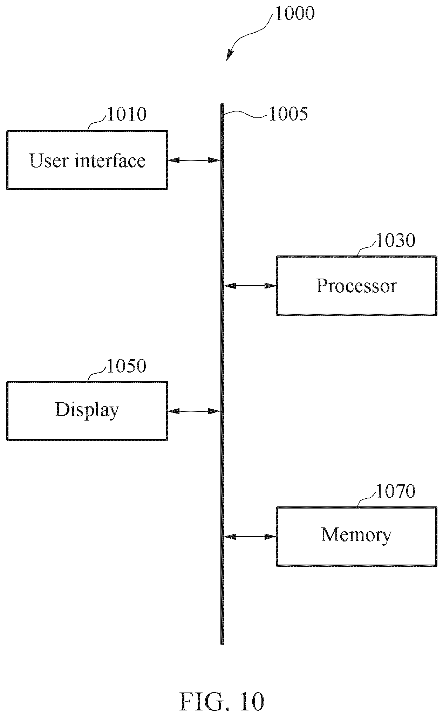

The server and/or the terminal according to an embodiment may include a processor. Hereinafter, the processor 1030 (e.g., the processor 1030 of FIG. 10) may be the processor 1030 of the server or the processor 1030 of the terminal, but embodiments are not limited thereto.

According to an embodiment, in operation 110, the processor 1030 may generate, based on viewpoint information, depth information in a pixel unit corresponding to an 3D object. The processor 1030 according to an embodiment may generate, based on the viewpoint information on a viewpoint from which the 3D object is viewed, first depth information in a pixel unit corresponding to the 3D object. The viewpoint information may include information about a viewpoint from which the 3D object is viewed by a user. The viewpoint information may include a viewpoint from which the 3D object is viewed from a viewer. The depth information in a pixel unit may include the distance between a viewpoint and the 3D object. For example, the depth information may include the distance between the position of a virtual camera and the 3D object. For example, it may be interpreted that as a depth value included in the depth information decreases the height of a pixel corresponding to the depth value increases. Using the depth information in a pixel unit, the processor 1030 may generate a 3D coordinate system from a 2D coordinate system. The first depth information may be information determined based on the distance between the 3D object and a viewpoint included in the viewpoint information for each pixel. The processor 1030 may determine the depth information for each pixel in a 3D space in which the viewpoint included in the viewpoint information is the origin. Therefore, the depth information determined in the 3D space in which the viewpoint is the origin may be the first depth information.

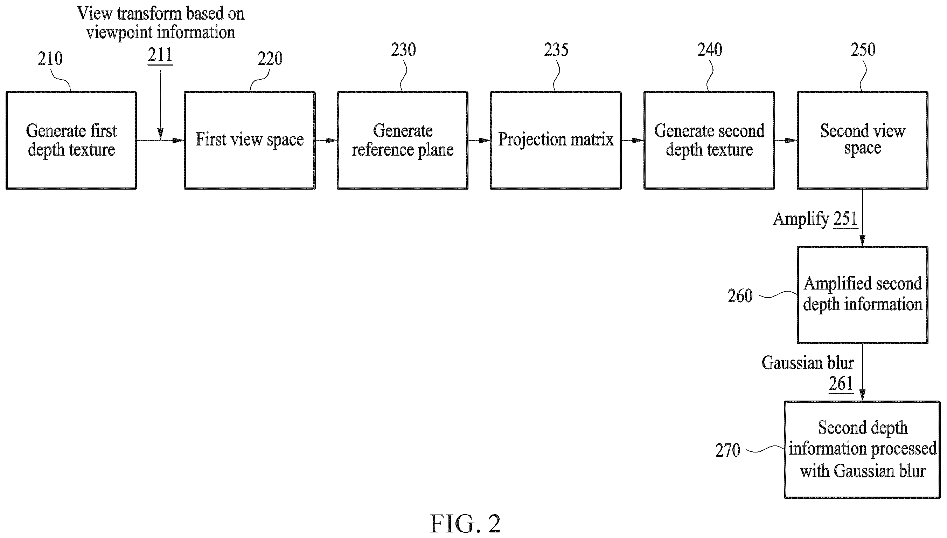

The process of generating the first depth information is described with reference to FIG. 2. The processor 1030 according to an embodiment may generate 210 a first depth texture. The first depth texture may have a depth value for each pixel in an image including the 3D object. The processor 1030 according to an embodiment may generate a first view space 220 through view transform 211 based on the viewpoint information in the first depth texture. The view space may be a 3D space in which the viewpoint included in the viewpoint information is the origin. The view space may be a space in which the viewpoint is the origin and a gaze direction is a z-axis. The view transform may be performed using a view matrix. The processor 1030 may transform a depth texture, which is a 3D space including depth information, into a view space through view transform. Therefore, the first depth information may be depth information in the first view space. Thus, the processor 1030 may require viewpoint information to generate a view space.

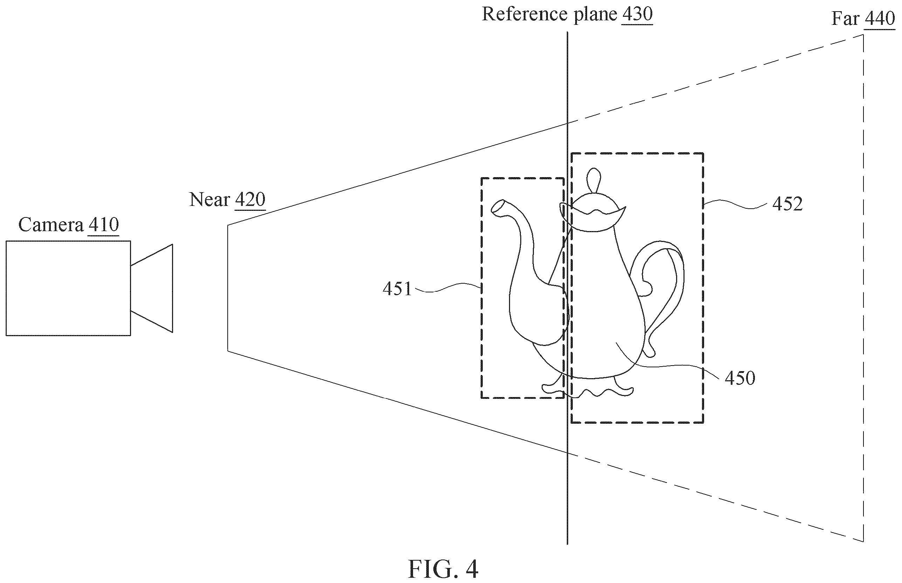

According to an embodiment, in operation 120, the processor 1030 may generate, based on a predetermined statistical value, a reference plane (e.g., a reference plane 430 of FIG. 4) by assigning a weight to the depth information. The depth information to which the weight is assigned may be the first depth information. The predetermined statistical value may be a value determined and stored through repeated processes to set a weight to be assigned to generate the reference plane 430. For example, the predetermined statistical value may be periodically updated by the user and may be replaced with a value obtained by performing many more tests to generate the reference plane 430. The reference plane 430 may be a plane that is a reference for generating a marker curved surface. The reference plane 430 may be one plane used to calculate a projection matrix (e.g., a projection matrix 235 of FIG. 2). The processor 1030 may use the reference plane 430 to generate a marker curved surface only for a 3D object on the reference plane 430 and generate a marker on the marker curved surface.

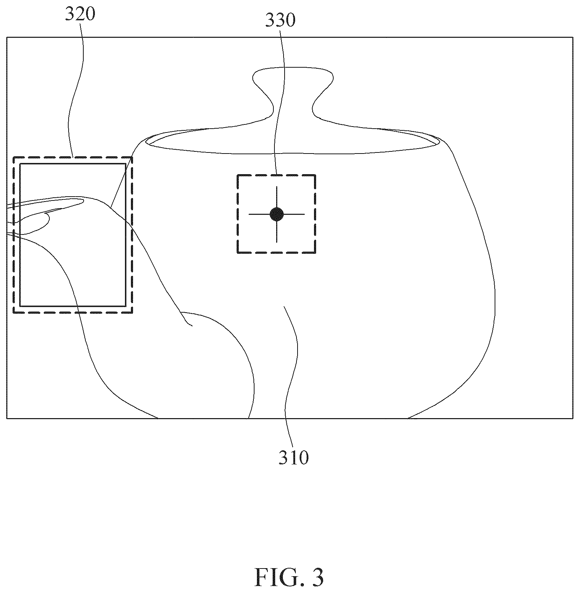

A weight is described in detail with reference to FIG. 3. The processor 1030 according to an embodiment may assign a weight to the first depth information in a pixel unit. As illustrated in FIG. 3, there may be a central region 330 and an edge region 320. In a simulation program, the central region 330 may be important for a user. Users tend to position a target to be edited at the center of a screen, so the importance of the central region 330 may be likely to be high. On the other hand, the edge region 320 may be a region with relatively lower importance.

The processor 1030 according to an embodiment may calculate an average value by assigning a weight that gradually decreases from a central region to an edge region in an image obtained based on viewpoint information. For example, the processor 1030 may gradually assign a weight higher than a predetermined standard to the first depth information as the distance from the central region decreases in the image obtained based on the viewpoint information. In addition, the processor 1030 may gradually assign a weight lower than the predetermined standard to the first depth information as the distance from the central region increases. For example, as illustrated in FIG. 3, a high weight may be assigned to first depth information of pixels included in the central region 330, and a low weight may be assigned to first depth information of pixels included in the edge region 320.

A 3D object 310 may have a region with a high height and a region with a low height. For example, referring to the 3D object 310 illustrated in FIG. 3, a region 320 may be a region with a high height. Pixels included in the region 320 may have a relatively low depth value. For example, the region 330 may be a region having a relatively low height compared to the region 320. Taking a kettle as an example, based on the viewpoint, the spout of the kettle may be positioned close to the viewpoint and the body of the kettle may be positioned far from the viewpoint. Pixels with small depth values may have a high probability of being outlier data. Outlier data has a higher probability of being absent in the center of a region and has a higher probability of being present in an edge region. Thus, the processor 1030 may effectively process outlier data by assigning a high weight to the central region and assigning a low weight as the distance from the central region increases.

The processor 1030 according to an embodiment may calculate an average value by assigning a weight to the first depth information in a pixel unit. For example, the processor 1030 may use a Gaussian function when assigning a weight. Using the Gaussian function, the processor 1030 may effectively remove outlier data (e.g., an extreme depth value of a pixel included in a target region of interest).

The processor 1030 according to an embodiment may calculate the average value by assigning a weight that gradually decreases from the central region to the edge region in the image obtained based on the viewpoint information. In the image, the processor 1030 may calculate the average value by assigning gradually higher weights to the first depth information as the distance from the central region decreases and assigning gradually lower weights to the first depth information as the distance from the central region increases. In addition, the processor 1030 may generate the reference plane 430 based on the average value. For example, the average value may be an average value of a depth value. The processor 1030 may generate the reference plane 430 at a distance equal to the average value from the viewpoint. Accordingly, the processor 1030 may generate the reference plane 430 centered on a region that the user considers important in the simulation program.

The processor 1030 according to an embodiment may project, onto the reference plane 430, 3D objects existing on the reference plane 430. The depth values of the pixels of the 3D objects existing on the reference plane 430 may be less than the depth value of the reference plane 430. The pixels may have the first depth information. Based on the first depth information, the processor 1030 according to an embodiment may project, onto the reference plane 430, a vector corresponding to a pixel closer to a viewpoint than the reference plane 430. The vector may be a 3D vector including 2D position coordinates of a pixel and the first depth information corresponding to the pixel in an image. For example, the vector may be represented as (x-axis position, y-axis position, first depth information).

The 3D objects existing on the reference plane 430 are described with reference to FIG. 4. FIG. 4 illustrates a viewpoint 410 and the reference plane 430. A 3D object 450 may be divided by the reference plane 430. Based on the reference plane 430, the 3D object 450 may be divided into a 3D object 451 existing "above" the reference plane 430 and a 3D object 452 existing "below" the reference plane 430. The depth values of the pixels of the 3D object 451 existing "above" the reference plane 430 may be less than the distance between the viewpoint 410 and the reference plane 430.

The processor 1030 according to an embodiment may generate a projection matrix 235 based on the reference plane 430. The projection matrix 235 may be a matrix for transforming 3D into 2D. Projection may be performed through the projection matrix 235. Projection may be performed through a process described below. The processor 1030 may transform 3D vertices to be projected into a space ranging from (-1, -1, 0) to (1, 1, 1). The processor 1030 may start 2D transform by limiting a Z-axis value to the range of -1 to 1. The processor 1030 may induce transform of an X-axis value and a Y-axis value according to a ratio by limiting the Z-axis value to -1 to 1. Referring to FIG. 4, a plane in which Z is -1 may be defined as a Near plane 410 and a plane in which Z is 1 may be defined as a Far plane 440. X and Y may be transformed within the range of -1 to 1, and the reason for setting a negative range is because it may be easy to fix the origin, which is the vanishing point, at the center.

The processor 1030 according to an embodiment may generate the projection matrix 235 using the reference plane 430. Referring to FIG. 4, the processor 1030 may generate the projection matrix 235 through the Near plane 410 and the reference plane 430. For example, the processor 1030 may determine, as the near plane 410, the plane in which Z is -1 and determine, as the reference plane 430, the plane in which Z is 1. The reference plane 430 may correspond to a plane in which Z is 0, for example.

Referring to FIG. 2, the processor 1030 according to an embodiment may generate (or extract) 240 a second depth texture using the projection matrix 235.

For example, by multiplying 3D coordinates by the projection matrix 235, the 3D coordinate values (x, y, z) may be normalized to values between -1 and 1. In this case, for normalization, the minimum and maximum values may have to be defined in advance. The processor 1030 may newly define the projection matrix 235 using the Near plane 410 and the Far plane 440, multiply the projection matrix 235 by 3D coordinates, project the projection matrix 235 into normalized device coordinates (NDC), and then generate the second depth texture by using, as a color value, the z value of the corresponding point normalized in the NDC. The NDC may correspond to a coordinate system that a 3D object has when the 3D object is transformed in a 2D space through projection transform. The processor 1030 may generate the second depth texture using the projection matrix 235 redefined based on the reference matrix 430. The processor 1030 may set the reference plane 430 as a Far' plane and extract the second depth texture using the projection matrix 235 newly redefined by the Far' plane.

Referring to FIG. 2, the processor 1030 according to an embodiment may generate a second view space 250 through view transform in a second depth texture. The processor 1030 may generate second depth information including a depth value in a pixel unit of the second view space. The processor 1030 may generate a marker curved surface based on the second depth information. The second depth information may include a depth value determined based on the reference plane 430 and a viewpoint. The depth value may be a depth value newly set based on the reference plane 430. The second depth texture is generated for a 3D object existing on the reference plane 430, so the marker curved surface may be generated in the form of covering the 3D object. Therefore, the marker curved surface may cover the 3D object on the reference plane 430, and as the distance from the 3D object increases, the marker curved surface may naturally come into contact with the reference plane 430.

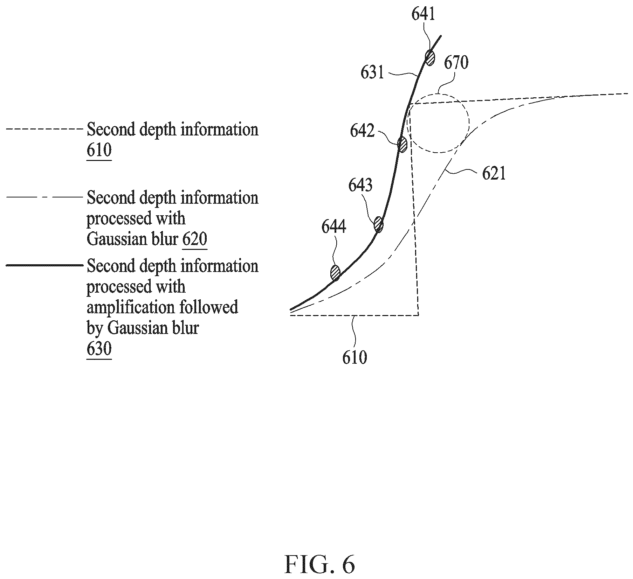

The processor 1030 according to an embodiment may smooth the marker curved surface. Referring to FIG. 6, a marker curved surface generated based on second depth information 610 may be formed in a cascade and discontinuous as illustrated in FIG. 6. When a marker is formed on the marker curved surface generated based on the second depth information 610, the marker may be generated at a position different from a position a user considers. Therefore, the processor 1030 may perform Gaussian blur processing to change the slope of the marker curved surface to a smooth slope rather than a stepped slope. As illustrated in FIG. 6, the marker curved surface generated based on the second depth information 620 processed with Gaussian blur may have a smooth slope. However, the marker curved surface generated based on the second depth information 620 processed with Gaussian blur may not cover all 3D objects.

As illustrated in FIG. 6, a partial region 670 of the 3D object may exist on the marker curved surface generated based on the second depth information 620 processed with Gaussian blur. In this case, a marker generated on the marker curved surface may be positioned inside the 3D object. Therefore, the processor 1030 may increase the second depth information 610 at a predetermined rate. For example, the processor 1030 may increase a depth value included in the second depth information 610 by two times. In addition, the processor 1030 may generate the second depth information 620 processed with Gaussian blur by performing Gaussian blur processing on a result obtained by increasing the second depth information 610 at a predetermined rate. The operation of increasing the second depth information 620 processed with Gaussian blur may be called "amplification".

As illustrated in FIG. 6, a marker curved surface generated based on second depth information 630 processed with amplification followed by Gaussian blur may be a curved surface 631 covering a region 670 that may not be covered by a curved surface 621.

The processor 1030 according to an embodiment may increase the second depth information 610 in a pixel unit at a predetermined rate. In the process of generating the reference plane 430 by assigning a weight (e.g., the process of generating the reference plane 430 using a Gaussian function), depth values of pixels positioned at the boundary at which the reference plane 430 and the 3D object meet may differ from the original depth value. Therefore, the processor 1030 may increase the second depth information 610 at a predetermined rate to restore the depth value. For example, when a depth value included in the second depth information 610 is increased by two times, the depth values of the pixels located at the boundary may change to be similar to the original depth value.

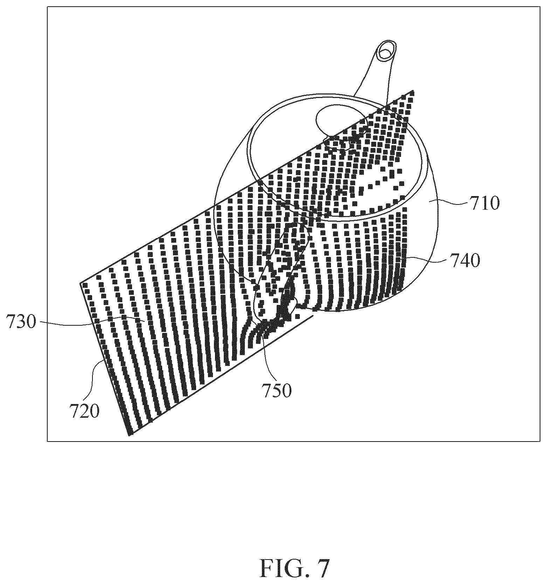

The processor 1030 according to an embodiment may generate second depth information of a second view space through texture sampling. The processor 1030 may obtain 3D coordinates for each pixel using the second depth information. Accordingly, the processor 1030 may generate a 3D object 710 and a plurality of points as illustrated in FIG. 7.

The processor 1030 according to an embodiment may generate, based on a user input, a marker on a marker curved surface. Referring to FIG. 6, the processor 1030 may generate, based on the user input, markers 641, 642, 643, and 644 on the curved surface 631.

When a marker is input not only to a 3D garment surface but also outside the garment through a method of generating a marker according to an embodiment, the processor 1030 may generate a marker according to a predetermined standard. Furthermore, the generated marker may be a marker corresponding to a user's intuition. Therefore, the method of generating a marker may be a method of generating a marker corresponding to a user's intuition.

FIG. 2 is a diagram illustrating a process of generating a marker curved surface, according to an embodiment.

The processor 1030 according to an embodiment may generate 210 the first depth texture and then generate the first view space 220 through view transform to generate a reference plane (e.g., the reference plane 430 of FIG. 4). In addition, the processor 1030 may generate 230 the reference plane 430 by assigning a weight to first depth information in the first view space. The process of generating the reference plane 430 is described above in detail with reference to FIG. 1, so the detailed description thereof is omitted.

The processor 1030 according to an embodiment may generate second depth information in a second view space through the reference plane 430 and the projection matrix 235. The second depth information is described above in detail with reference to FIG. 1, so the detailed description thereof is omitted.

The processor 1030 according to an embodiment may amplify 251 the second depth information. Amplification may be increasing the second depth information at a predetermined rate. The processor 1030 may perform Gaussian blur 261 processing on amplified second depth information 260. The processor 1030 may generate a marker curved surface based on second depth information 270 processed with Gaussian blur.

FIG. 3 is a diagram illustrating a method of assigning a weight to first depth information, according to an embodiment.

The method of assigning a weight to first depth information is described above with reference to FIG. 1, so the detailed description thereof is omitted.

FIG. 4 is a diagram illustrating the reference plane 430 according to an embodiment.

The reference plane 430 is described above with reference to FIG. 1, so the detailed description thereof is omitted.

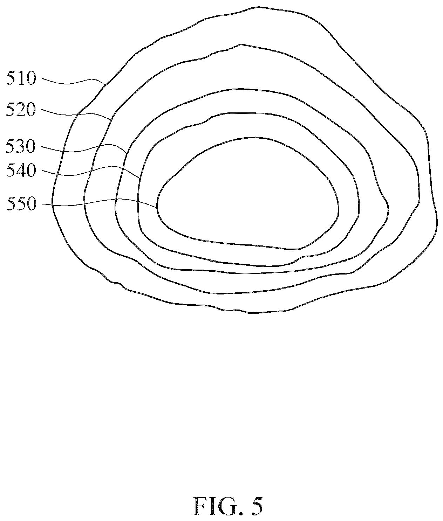

FIG. 5 is a diagram illustrating contour lines according to an embodiment. FIG. 5 illustrates contour lines 510, 520, 530, 540, and 550 according to an embodiment.

The processor 1030 according to an embodiment may generate contour lines based on depth information. The contour lines may signify that the elevation increases toward the inside. As illustrated in FIG. 5, as a result of generating contour lines based on depth information, the contour lines 510, 520, 530, 540, and 550 may be generated. The height of the contour line 510 may be the lowest and the height of the contour line 550 may be the highest, and the height may increase from the contour line 510 to the contour line 550.

Referring to FIG. 6, when contour lines are generated based on the second depth information 610, the intervals between the contour lines may be narrow. Narrow intervals between the contour lines may indicate that a slope is steep. The processor 1030 may perform Gaussian blur processing on the second depth information 610. When contour lines are generated based on the second depth information 610 processed with Gaussian blur, the intervals between the contour lines may be relatively wide. The reason is that by performing Gaussian blur processing, the slope of a marker curved surface changes to a gentle slope, like the curved surface 621.

FIG. 6 is a diagram illustrating a marker curved surface generated based on amplification, according to an embodiment.

Since the detailed description of FIG. 6 is provided above with reference to FIG. 1, the detailed description thereof is omitted.

FIG. 7 is a diagram illustrating a candidate position at which a marker may be generated, according to an embodiment.

The processor 1030 according to an embodiment may generate a reference plane 720. As illustrated in FIG. 7, a plurality of points may exist on the reference plane 720. A point 730 may be a point that exists outside a 3D object 710. The processor 1030 may determine, based on the reference plane 720 and points that exist on the boundary of the 3D object 710, the positions of the points that exist outside the 3D object. When the positions of the points on the boundary are inconsistent, the processor 1030 may process the positions of the points on the boundary to be smoothly continuous through smoothing.

All of the points illustrated in FIG. 7 may be points existing on a marker curved surface. Since the marker curved surface is formed to cover the 3D object, even points outside the 3D object are not positioned directly on the reference plane 720 like a point 750 but are naturally positioned in a structure in which the curved surface spreads as the slope eases. When there is no marker curved surface, the point 750 may be positioned on the reference plane 720. When the point 750 is positioned on the reference plane 720, a marker may be generated in a position that goes against a user's intuition. A point 740 may be a point that exists on the 3D object. The points may or may not correspond to pixels. A point is simply an expression method used to express the shape of a marker curved surface, but embodiments are not limited thereto.

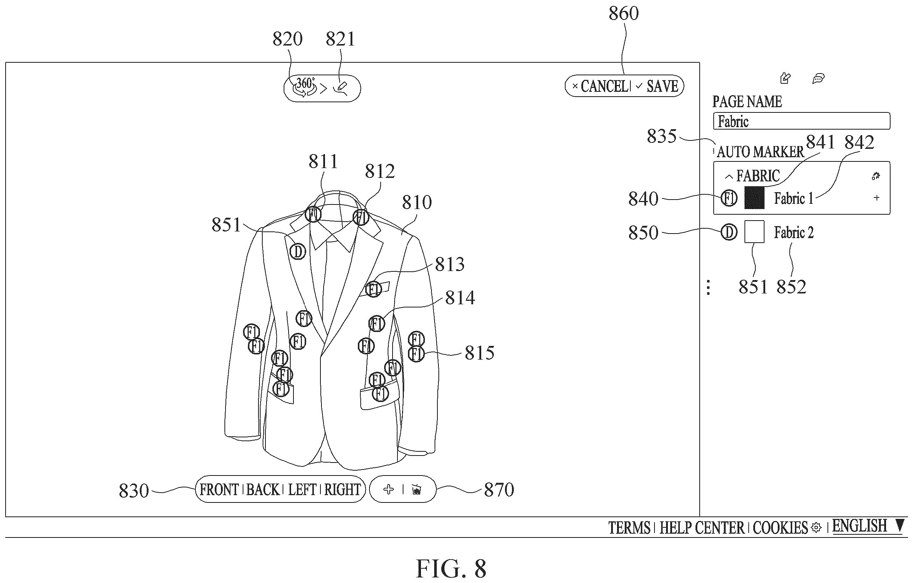

FIG. 8 is a diagram illustrating a UI on which a marker is displayed, according to an embodiment.

FIG. 8 illustrates a 3D object 810, markers 811, 812, 813, 814, 815, and 851, a viewpoint rotation input 820, a line input 821, a viewpoint transform input 830, an automatic marker 835, marker identifiers 840 and 850, fabric images 841 and 851, fabric names 842 and 852, a cancel/save input 860, and an add/delete input 870.

The 3D object 810 may be a target to be edited in a 3D garment simulation. The 3D object 810 may be a design item such as a garment, a shoe, a bag, or the like. An avatar or a character may be displayed on a screen along with the 3D object 810. In this case, a result of a simulation in which the design item is worn by the avatar or the character may be displayed on the screen. The avatar or the character may be displayed on the screen or omitted based on a user input.

The markers 811, 812, 813, 814, 815, and 851 may be points on a marker curved surface that covers the 3D object 810.

The viewpoint rotation input 820 may be an input that rotates a viewpoint based on a user input. A user may view the 3D object 810 from various angles using the viewpoint rotation input 820. The line input 821 may be an input for inputting a line to the 3D object 810. Through this function, the user may input a line to the 3D object 810, and the design of the 3D object 810 may be transformed through the line.

The viewpoint transform input 830 may be an input that moves a viewpoint to a predetermined viewpoint. For example, the viewpoint may be predetermined as front, back, left, and right viewpoints. When the user selects the back viewpoint, a screen showing the 3D object 810 as viewed from back may be displayed. When the user selects the left viewpoint, a screen showing the 3D object 810 as viewed from the left side may be displayed.

The automatic marker 835 may be a marker that is automatically generated. The processor 1030 may generate the automatic marker 835 regardless of a user input and display the automatic marker 835 on the 3D object 810. For example, the automatic marker 835 may be the markers 811, 812, 813, 814, and 815. The markers 811, 812, 813, 814, and 815 may be markers corresponding to Fabric 1.

The marker identifiers 840 and 850 may be the same image as a marker displayed on the 3D object 810. Marker identifiers may allow a user to distinguish markers corresponding to different categories (e.g., fabric, material, etc.). Based on a user input, the processor 1030 may change a marker identifier.

The fabric images 841 and 851 may include partial images of fabrics.

The fabric names 842 and 852 may be names of fabrics and may be arbitrarily set by the user.

The cancel/save input 860 may be an input for canceling editing or saving edited content.

The add/delete input 870 may be an input for adding or deleting edited content. Additionally, the add/delete input 870 may be an input for adding or deleting a 3D object.

The user may select a predetermined position on the 3D object to generate a marker. For example, the processor 1030 may display, based on a user input, a marker corresponding to Fabric 2 on the 3D object 810. The marker generated based on the user input may be the marker 851. The marker generated by the user may have the same or different marker identifiers as an automatically created marker.

The processor 1030 according to an embodiment may display an annotation on the generated marker. An annotation may be a means of communicating between users through a UI. For example, an annotation may be expressed as text, a picture, a shape, a symbol, and the like. The users may communicate design-related topics with other users based on a marker. In this case, the users may communicate by displaying annotations within a predetermined distance based on a marker. Thus, the processor 1030 may display an annotation on a marker based on a user input for user convenience.

The processor 1030 according to an embodiment may edit the position of a marker based on a user input. Accordingly, the user may move the position of the marker displayed on the 3D object.

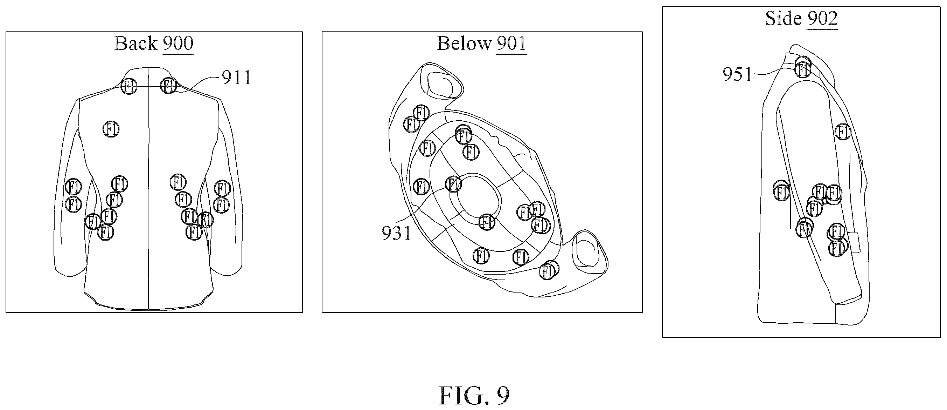

FIG. 9 is a diagram illustrating a UI on which a marker is displayed when a viewpoint is changed, according to an embodiment.

The processor 1030 according to an embodiment may display a marker even when the marker is obscured by a 3D object due to a change in a viewpoint. Additionally, the processor 1030 may allow a user input for the marker obscured by the 3D object.

For example, when the 3D object 810 of FIG. 8 is viewed from back 900, a marker 911 may be displayed. In FIG. 8, the marker 911 may be the same marker as the marker 811. When a viewpoint is changed to the back 900, the marker 811 may be obscured by the 3D object 810. However, the processor 1030 may display the marker 811 obscured by the 3D object 810 like the marker 911 so that the marker 811 is visible to a user. The processor 1030 may allow a user input for the marker 911. Through this, the user may view and select the marker obscured by the 3D object 810.

In summary, when the marker 811 generated due to a change in a viewpoint is obscured by the 3D object 810, the processor 1030 may display the marker 911 generated based on the changed viewpoint and allow the user input for the marker 911.

In another example, when the 3D object 810 of FIG. 8 is viewed from below 901, the marker 811 may be obscured by the 3D object 810 but may be displayed like a marker 931.

In another example, when the 3D object 810 of FIG. 8 is viewed from a side 902, the marker 811 may be displayed like a marker 952.

As described above, even when a viewpoint changes, a marker may maintain its position and be displayed on a screen. In addition, even when the marker is obscured due to a change in a viewpoint, the marker may be displayed on a screen, and a user may select the marker.

FIG. 10 is a block diagram illustrating a simulation device according to an embodiment. A simulation device 1000 according to an embodiment may be a server. The simulation device 1000 according to another embodiment may be a terminal (e.g., a mobile device, a desktop computer, a laptop computer, a PC, etc.).

Referring to FIG. 10, the simulation device 1000 according to an embodiment may include a UI 1010, the processor 1030, a display 1050, and a memory 1070. The UI 1030, the processor 1030, the display 1050, and the memory 1070 may be connected to one other via a communication bus 1005.

The UI 1010 may receive a user input for each of a plurality of physical property parameters. The UI 1010 may receive the user input for each of the physical property parameters through, for example, a keyboard, a stylus pen, a mouse click, and/or a touch input by a user's finger.

The processor 1030 may generate first depth information in a pixel unit corresponding to a 3D object based on viewpoint information on a viewpoint from which the 3D object is viewed. The processor 1030 may generate a reference plane based on a predetermined statistical value by assigning a weight to the first depth information. The processor 1030 may generate a marker curved surface that covers the 3D object based on the reference plane. The processor 1030 may generate a marker on the marker curved surface based on a user input.

The display 1050 may display a 3D simulation result generated by the processor 1030. The simulation device 1000 may output at least one marker from the display 1050.

The memory 1070 may store the generated 3D simulation result. In addition, the memory 1070 may store a variety of information generated in a processing process of the processor 1030. In addition, the memory 1070 may store a variety of data and programs. The memory 1070 may include a volatile memory or a non-volatile memory. The memory 1070 may include a large-capacity storage medium such as a hard disk to store the variety of data.

In addition, the processor 1030 may perform at least one method described with reference to FIGS. 1 to 9 or an algorithm corresponding to the at least one method. The processor 1030 may be a data processing apparatus implemented by hardware including a circuit having a physical structure to perform desired operations. For example, the desired operations may include code or instructions in a program. For example, the simulation device 1000 that is implemented as a hardware data processing device may include, for example, a microprocessor, a central processing unit (CPU), a processor core, a multi-core processor, a multiprocessor, an application-specific integrated circuit (ASIC), and a field-programmable gate array (FPGA).

The processor 1030 may execute a program and control the simulation device 1000. Program code executed by the processor 1030 may be stored in the memory 1070.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and/or DVDs; magnetooptical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter. The above-described hardware devices may be configured to act as one or more software modules in order to perform the operations of the embodiments, or vice versa.

The software may include a computer program, a piece of code, an instruction, or one or more combinations thereof, to independently or uniformly instruct or configure the processing device to operate as desired. Software and/or data may be embodied permanently or temporarily in any type of machine, component, physical or virtual equipment, or computer storage medium or device capable of providing instructions or data to or being interpreted by the processing device. The software may also be distributed over network-coupled computer systems so that the software is stored and executed in a distributed fashion. The software and data may be stored by one or more non-transitory computer-readable recording mediums.

Although the embodiments have been described with reference to the limited drawings, one of ordinary skill in the art may apply various technical modifications and variations based thereon. For example, suitable results may be achieved if the described techniques are performed in a different order, and/or if components in a described system, structure, device, or circuit are combined in a different manner, and/or replaced or supplemented by other components or their equivalents.

Therefore, other implementations, other embodiments, and equivalents to the claims are also within the scope of the following claims.

## Claims

1. A method of generating a marker on a three-dimensional (3D) object in a 3D simulation, the method comprising:
generating, based on viewpoint information about a viewpoint from which the 3D object is viewed, first depth information in a pixel unit corresponding to the 3D object;
generating a reference plane based on a predetermined statistical value by assigning a weight to the first depth information;
generating, based on the reference plane, a marker curved surface covering the 3D object; and
generating, based on a user input, a marker on the marker curved surface.

2. The method of claim 1, wherein the first depth information in a pixel unit is information determined based on a distance between a viewpoint comprised in the viewpoint information for each pixel and the 3D object.

3. The method of claim 1, wherein the generating of the first depth information in a pixel unit comprises generating first depth information comprising a depth value in a pixel unit of a first view space generated through view transform in a depth texture, wherein the first view space is a space in which a viewpoint comprised in the viewpoint information is an origin.

4. The method of claim 1, wherein the generating of the reference plane comprises:
calculating an average value by assigning a weight to the first depth information in a pixel unit; and
generating the reference plane based on the average value.

5. The method of claim 1, wherein the generating of the reference plane comprises calculating an average value by assigning a weight that gradually decreases from a central region to an edge region in an image obtained based on the viewpoint information.

6. The method of claim 1, wherein the generating of the marker curved surface comprises generating, based on the first depth information, a marker curved surface based on pixels closer to a viewpoint than the reference plane.

7. The method of claim 1, wherein the generating of the marker curved surface comprises generating a second depth texture using a projection matrix redefined based on the reference plane.

8. The method of claim 7, wherein the generating of the marker curved surface comprises:
generating second depth information comprising a depth value in a pixel unit of a second view space generated through view transform in the second depth texture; and
generating a marker curved surface based on the second depth information.

9. The method of claim 8, wherein the second depth information comprises a depth value determined based on the reference plane and a viewpoint.

10. The method of claim 1, wherein the generating of the marker curved surface comprises smoothing the marker curved surface.

11. The method of claim 10, wherein the smoothing of the marker curved surface comprises increasing second depth information in a pixel unit at a predetermined rate.

12. The method of claim 10, wherein the smoothing of the marker curved surface comprises processing Gaussian blur on the marker curved surface.

13. The method of claim 10, wherein the smoothing of the marker curved surface comprises processing Gaussian blur on a result obtained by increasing second depth information in a pixel unit at a predetermined rate.

14. The method of claim 1, further comprising:
changing, based on a user input, at least one of a position of a marker or a marker identifier.

15. The method of claim 1, further comprising:
when the generated marker is occluded by the 3D object because a viewpoint is changed, displaying the generated marker based on the changed viewpoint and allowing a user input for the generated marker.

16. The method of claim 1, further comprising:
displaying an annotation on the generated marker.

17. A non-transitory computer-readable storage medium storing instructions that, when executed by a processor, cause the processor to perform the method of claim 1.

18. A simulation device for performing a three-dimensional (3D) simulation,
the simulation device comprising:
a user interface (UI);
a memory; and
a processor,
wherein the processor is configured to:
generate, based on viewpoint information about a viewpoint from which a 3D object is viewed, first depth information in a pixel unit corresponding to the 3D object;
generate a reference plane based on a predetermined statistical value by assigning a weight to the first depth information;
generate, based on the reference plane, a marker curved surface covering the 3D object; and
generate a marker on the marker curved surface based on a user input.
